# EUROPÄISCHE PATENTSCHRIFT

(11) **EP 2 802 488 B1**
(45) Veröffentlichungstag und Bekanntmachung des Hinweises auf die Patenterteilung: **27.07.2016**
(21) Anmeldenummer: 12791152.7
(22) Anmeldetag: 20.11.2012
(51) Int. Cl.: B60S 1/08

(54) **WISCHERSTEUERUNG**
WIPER CONTROL
COMMANDE D'ESSUIE-GLACE

(30) Priorität: 11.01.2012 EP 12150726
(43) Veröffentlichungstag der Anmeldung: 19.11.2014
(73) Patentinhaber: Saint-Gobain Glass France, 92400 Courbevoie (FR)
(72) Erfinder: MELCHER, Martin, 52134 Herzogenrath (DE)
(74) Vertreter: Gebauer, Dieter Edmund
(86) Internationale Anmeldenummer: PCT/EP2012/073045
(87) Internationale Veröffentlichungsnummer: WO 2013/104456

(56) Entgegenhaltungen:
- US-A1- 2006 130 877
- US-A1- 2007 241 612

## Beschreibung

Die Erfindung betrifft ein Verfahren und eine Vorrichtung zur Reinigung und Trocknung einer transparenten Scheibe mit hydrophober Beschichtung zum Abwischen der Restfeuchte. Die Frontscheiben und Heckscheiben von Fahrzeugen sind in der Regel mit Scheibenwischern und Wischersystemen ausgestattet, die die Scheiben bei Regen oder Spritzwasser von Wassertropfen befreien. In Fahrzeugen der Mittel- und Oberklasse sind die Wischersysteme meist mit Mikroprozessoren und Regensensoren ausgestattet, die den Wischvorgang automatisch steuern und das Wischintervall an die auftreffende Regenmenge anpassen. Solche Systeme sind beispielsweise aus DE 102 38 168 A1 US 2006/130877 A1 und EP 1 614 594 A1 bekannt.

Zur Unterstützung der Wischersysteme werden wasserabweisende, hydrophobe Beschichtungen auf den Scheibenaußenseiten verwendet. Die hydrophobe Beschichtung führt zu einem Perleffekt und zur Ausbildung von kleinen Wassertröpfchen, wie Schneider et al. in der FAT-Schriftenreihe Nr. 167, ISSN 0933-050 X beschreiben. Die kleinen Wassertröpfchen werden vom Fahrtwind aus dem Sichtfeld entfernt. Der Gebrauch des Scheibenwischers wird deutlich reduziert und die Durchsicht verbessert. Des Weiteren treten weniger Störeffekte und Reflektionen auf, insbesondere bei Dunkelheit und Gegenlicht. Eine hydrophobe Beschichtung wird beispielsweise durch Plasmaaktivierung einer Siliziumoxycarbid-Schicht erreicht, wie aus EP 1 720 808 A1 oder WO 2010/079299 A1 bekannt ist.

Bei der Entwicklung hydrophober Beschichtungen von Windschutzscheiben wird üblicherweise davon ausgegangen, dass die mechanische Aktion des Scheibenwischers die Beschichtung schädigt, wie aus GB 2 357 541 A und WO 2010/079299 A1 bekannt ist. Ebenso wird davon ausgegangen, dass häufiges Reinigen der Scheibe durch die damit verbundenen mechanischen und chemischen Angriffe schädlich für die Beschichtung ist. Demgegenüber besteht die Aufgabe der vorliegenden Erfindung darin, ein Verfahren und eine Vorrichtung zur Erhöhung der Lebensdauer einer hydrophoben Beschichtung in vorteilhafter Weise weiterzubilden. Diese und weitere Aufgaben werden nach dem Vorschlag der Erfindung durch ein Verfahren, eine Vorrichtung und eine Verwendung mit den Merkmalen der nebengeordneten Patentansprüche gelöst. Vorteilhafte Ausgestaltungen der Erfindung sind durch die Merkmale der Unteransprüche angegeben.

Wie umfangreiche Untersuchungen der Erfinder zeigten, wird die Wirkung und Lebensdauer einer hydrophoben Beschichtung durch das Eintrocken von Wasser auf der Beschichtung wesentlich verschlechtert. Beim Eintrocknen verbleiben Kalkreste und Schmutzpartikel auf der Beschichtung und mindern deren hydrophobe Wirkung.

Die Erfindung umfasst ein Verfahren zur Reinigung und Trocknung einer transparenten Scheibe mit hydrophober Beschichtung zum Abwischen der Restfeuchte, wobei nach dem Abschalten eines Fahrzeugmotors eine Wassermenge auf einer Außenseite einer Scheibe überprüft wird und bei konstanter oder abnehmender Wassermenge nach einer Wartezeit von mindestens 1 Minute mindestens ein Wischvorgang ausgeführt wird.

Die Wassermenge beträgt bevorzugt die minimale Menge an Wasser, die durch den Regensensor gemessen werden kann, bevorzugt mindestens ein Wassertropfen im Sensorbereich des Regensensors oder ein entsprechender Wasserfilm, der über den Sensorbereich des Regensensors verteilt ist. Der Wasserfilm kann beispielsweise ein Taufilm sein, der am Morgen auf der Scheibe eines im freien abgestellten Fahrzeugs kondensiert.

Das erfindungsgemäße Verfahren wird bevorzugt durch eine Wischersteuerung gesteuert, beispielsweise durch eine mikroprozessor- oder mikrocontrollergesteuerte Wischersteuerung. Die Wischersteuerung ist programmtechnisch so eingerichtet, dass das im Folgenden beschriebene Verfahren zur Reinigung und Trocknung der Scheibe ausgeführt werden kann. Die Wischersteuerung kann in die bereits vorhandene Steuerung der Scheibenwischer integriert sein oder als externes Bauteil realisiert sein. Die Wischersteuerung kann weitere Funktionen, wie beispielsweise die Wahl der Geschwindigkeit der Scheibenwischer oder eine regenabhängige Intervallschaltung aufweisen. Die Wartezeit wird bevorzugt durch einen Zeitmesser bestimmt. Der Zeitmesser ist beispielsweise in die Wischersteuerung integriert oder alternativ ein externes Elektronikelement. Die Wassermenge wird vorteilhafterweise durch einen Regensensor gemessen.

Das erfindungsgemäße Verfahren wird auf Basis eines manuell oder automatisch aktivierten Vorgangs durchgeführt. Ein automatisierter Vorgang wird beispielsweise durch das Abschalten des Fahrzeugmotors oder das Abschalten der Zündelektrik gestartet.

Nach dem Start des Vorgangs wird in einem Schritt A der Zeitmesser zurückgesetzt. In Schritt B wird der Schaltzustand des Wischerschalters überprüft. Über den Wischerschalter kann die Wischeranordnung aus Wischermotor und Scheibenwischer manuell gesteuert werden. Der Wischerschalter dient in der Regel auch zur Steuerung der Geschwindigkeit des Scheibenwischers. Ist der Wischerschalter eingeschaltet, befindet sich der Scheibenwischer bereits im Wischvorgang und ein erfindungsgemäßes Reinigen und Trocken ist nicht notwendig. In diesem Fall wird Schritt A solange wiederholt, bis der Wischerschalter ausgeschaltet wird. Ist der Wischerschalter ausgeschaltet, wird Schritt C durchgeführt.

In Schritt C wird die Wassermenge auf der Scheibe überprüft. Dazu wird das Datensignal des Regensensors ausgewertet. Liefert der Regensensor das Signal einer trockenen Scheibe, wird Schritt A durchgeführt. Dies ist der Fall, wenn es nicht geregnet hat oder die Scheibe sich im Trockenen befindet, beispielsweise in einer Garage. In beiden Fällen ist ein Trocknen der Scheibe nicht notwendig und ein Wischvorgang führt nicht zu einer Erhöhung der Lebensdauer oder zu einer Verbesserung der Wirkung der hydrophoben Beschichtung. Liefert der Regensensor das Signal einer nassen Scheibe wird Verfahrenschritt D durchgeführt.

In Schritt D wird der Regensensor erneut überprüft. Entspricht das Signal des Regensensors neu hinzukommenden Regentropfen wird Schritt A durchgeführt. Im Falle anhaltenden Regens ist ein erfindungsgemäßes Reinigen und Trocken der Scheibe nicht möglich und ein Wischvorgang nicht sinnvoll. Detektiert der Regensensor keine neuen Regentropfen, so wird Schritt E durchgeführt.

In Schritt E wird der Zeitmesser überprüft. Gibt der Zeitmesser eine Zeitdauer kleiner einer definierten Wartezeit W vor, so wird Schritt B durchgeführt. Gibt der Zeitmesser eine Zeitdauer größer oder gleich der Wartezeit W vor, so wird Schritt F durchgeführt. Dies hat die Folge, dass erst nach Beendigung des Regens und einer Wartezeit W die erfindungsgemäße Reinigung und Trocknung der Scheibe erfolgt.

In einer vorteilhaften Ausführungsform des erfindungsgemäßen Verfahrens wird der mindestens eine Wischvorgang nach einer Wartezeit W von 1 min. bis 30 min., bevorzugt 2 min. bis 10 min. ausgeführt. Die Wartezeit W ergibt sich als Optimierung zweier gegenläufiger Prozesse: Einerseits muss die Wartezeit W lange genug gewählt werden, um sicherzustellen, dass beispielsweise ein Regenschauer vorüber ist und keine weiteren Regentropfen auf die Scheibe auftreffen. Gleichzeitig darf das Wasser auf der Scheibe nicht zu lange antrocknen um den erfindungsgemäßen Effekt der Reinigung und Trocknung der Scheibe zu erzielen.

In Schritt F wird mindestens ein Wischvorgang durchgeführt. Dies erfolgt durch Ausgabe eines Steuersignals von der Wischersteuerung an die Wischeranordnung. Anschließend wird das erfindungsgemäße Verfahren in Verfahrenschritt A neu begonnen oder der Vorgang beendet.

In einer vorteilhaften Ausführungsform des erfindungsgemäßen Verfahrens werden ein bis zehn Wischvorgänge, bevorzugt ein bis drei und besonders bevorzugt ein Wischvorgang ausgeführt. Die zur Trocknung einer durchschnittlich nassen Scheibe erforderliche Anzahl von Wischvorgängen ist von der Größe und dem Model der Wischeranordnung und der Scheibe abhängig und kann im Rahmen einfacher Experimente ermittelt werden.

In einer vorteilhaften Ausführungsform des erfindungsgemäßen Verfahrens wird vor oder während des Wischvorgangs eine Scheibenwaschanlage eingeschaltet. Dabei wir eine Reinigungsflüssigkeit auf die hydrophobe Beschichtung der Scheibe gesprüht. Dies hat den besonderen Vorteil, dass Verschmutzungen wie Staub, Öl und Insekten besser entfernt werden und die Scheibe nochmals komplett befeuchtet wird. Dies ermöglichte eine besonders gute Reinigung und Trocknung der Scheibe.

Es ist besonders vorteilhaft, wenn das erfindungsgemäße Verfahren im abgeschalteten Zustand des Fahrzeugs ununterbrochen durchgeführt wird, insbesondere bei längerem Stillstand im freien Gelände ohne Überdachung. Durch das erfindungsgemäße Verfahren wird auftreffendes Regenwasser bei Beendigung des Regens entfernt und die Scheibe getrocknet. Dies erhält die wasserabweisende Wirkung der hydrophoben Beschichtung über eine lange Zeit.

In einer alternativen Weiterbildung des erfindungsgemäßen Verfahrens wird in Schritt F zunächst überprüft, ob der Fahrzeugmotor noch angeschaltet ist oder vor weniger als einer definierten Abschaltzeit Z abgeschaltete wurde. Ist die Zeitdauer seit Abschalten des Fahrzeugs oder Ausschalten der Zündungselektrik kleiner als die Abschaltzeit Z wird der Wischvorgang durchgeführt. Die Abschaltzeit Z beträgt bevorzugt von 10 min. bis 60 min. und besonders bevorzugt von 20 min. bis 40 min. Ist die Abschaltzeit Z überschritten, wird Schritt A durchgeführt oder der Vorgang beendet. Dies hat den Vorteil, dass das Fahrzeug in geparkter, ausgeschalteter Position nach einem Regenschauer nicht spontan anfängt die Scheibe zu wischen. Dies könnte bei langem Stillstand des Fahrzeugs die Fahrzeugbatterie entleeren. Des Weiteren könnte es Passanten oder andere Verkehrsteilnehmer erschrecken, wenn die Scheibenwischer eines geparkten Fahrzeugs ohne Fahrer eingeschaltet werden.

Die Erfindung erstreckt sich weiterhin auf eine Vorrichtung zur Reinigung und Trocknung einer transparenten Scheibe mit hydrophober Beschichtung zum Abwischen der Restfeuchte, mindestens umfassend:
- eine Wischeranordnung mit einem Wischer auf der Außenseite der Scheibe und einem Wischermotor zum Durchführen eines Wischvorgangs,
- einen Regensensor zum Messen der Wassermenge auf der Außenseite der Scheibe,
- eine mit der Wischeranordnung und dem Regensensor verbundene Wischersteuerung, wobei die Wischersteuerung nach dem Abschalten des Fahrzeugmotors, bei konstanter oder abnehmender Wassermenge nach einer Wartezeit von mindestens 1 min. mindestens einen Wischvorgang ausführt.

Die erfindungsgemäße Scheibe umfasst Einfachverglasungen aus Einzelscheiben oder Mehrfach- und Verbundverglasungen aus mehreren Einzelscheiben, die durch Zwischenschichten miteinander verbunden sind sowie Isolierglasscheiben die Gas-gefüllte Isolationsbereiche enthalten. Als Scheibe der Verbundscheibe oder der Einzelscheibe sind im Grunde alle transparenten Substrate geeignet, die unter den Bedingungen der Herstellung und der Verwendung der erfindungsgemäßen Scheibe thermisch und chemisch stabil sowie dimensionsstabil sind und eine hydrophobe Oberfläche aufweisen oder sich mit einer hydrophoben Beschichtung beschichten lassen.

Die Scheibe enthält bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Geeignete Gläser sind beispielsweise aus EP 0 847 965 B1 bekannt.

Die Dicke der Scheibe kann breit variieren und so hervorragend den Erfordernissen des Einzelfalls angepasst werden. Vorzugsweise werden Scheiben mit den Standardstärken von 1,0 mm bis 25 mm, bevorzugt von 1,4 mm bis 2,5 mm für Fahrzeugglas und bevorzugt von 4 mm bis 25 mm für Möbel, Geräte und Gebäude, insbesondere für elektrische Heizkörper, verwendet. Die Größe der Scheibe kann breit variieren und richtet sich nach der Größe der erfindungsgemäßen Verwendung. Die Scheibe kann eine beliebige dreidimensionale Form aufweisen. Bevorzugt ist die Scheibe planar oder leicht oder stark in einer Richtung oder in mehreren Richtungen des Raumes gebogen. Insbesondere werden planare Substrate verwendet. Die Scheibe kann farblos oder gefärbt sein.

In einer vorteilhaften Ausgestaltung enthält die erfindungsgemäße Verbundscheibe mindestens zwei Scheiben, die mit mindestens einer Zwischenschicht miteinander verbunden sind. Die Zwischenschicht enthält vorzugsweise einen thermoplastischen Kunststoff, wie Polyvinylbutyral (PVB), Ethylenvinylacetat (EVA), Polyurethan (PU), Polyethylenterephthalat (PET) oder mehrere Schichten davon, bevorzugt mit Dicken von 0,3 mm bis 0,9 mm.

Als hydrophobe Beschichtung sind alle Beschichtungen geeignet, die sich auf die eingangs genannten Einzelscheiben oder Verbundscheiben aufbringen lassen und ihre hydrophobe Wirkung bei den verwendungsgemäßen Einsatzbedingungen, beispielsweise als Windschutzscheibe eines Fahrzeugs, ausreichend lange aufrechterhalten.

Beispiele besonders vorteilhafter hydrophober Beschichtungen finden sich in EP 1 720 808 A1, WO 2010/0729299 A1 und WO 2011/070293 A1. Derartige hydrophobe Beschichtungen enthalten bevorzugt Alkylsilan und insbesondere fluoriertes Alkylsilan. Die hydrophobe Beschichtung kann eine Grundschicht aus Siliziumdioxid SiO₂ enthalten, welche optional ein Element oder mehrere Elemente aus der Gruppe AI, B, C und Zr enthält, besonders bevorzugt Siliziumoxycarbid SiOₓC_{y}. Die Grundschicht ist bevorzugt zwischen Scheibe und Alkylsilanschicht angeordnet. Die Grundschicht ist bevorzugt in einem Plasma aus Argon, Helium, Stickstoff, Sauerstoff, Wasserdampf oder einem Gemisch daraus aktiviert. Derartige Beschichtungen sind besonders für Fahrzeugenscheiben geeignet, in weitem Maße witterungsbeständig und gegen mechanischen Abrieb stabil.

Die Anordnung umfasst weiterhin zumindest einen Regensensor, welcher dazu geeignet ist, Nässe und Regentropfen auf der Außenseite der Scheibe zu detektieren. Der Regensensor muss außerdem neue Regentropfen, d.h. eine Veränderung der Regentropfen auf der Scheibe detektieren können. Geeignete Regensensoren sind beispielsweise aus DE 102 61 244 A1, DE 10 2007 037 548 A1 und EP 1 971 509 B1 bekannt und messen die Regenmenge kapazitiv oder mit optischen Methoden.

Des Weiteren erstreckt sich die Erfindung auf die Verwendung des erfindungsgemäßen Verfahrens oder der erfindungsgemäßen Vorrichtung in Fortbewegungsmitteln zur Fortbewegung auf dem Lande, in der Luft oder zu Wasser, insbesondere in Kraftfahrzeugen, insbesondere als Windschutzscheibe und Heckscheibe, sowie als funktionales und/oder dekoratives Einzelstück und als Einbauteil in Möbeln, Geräten und Gebäuden.

Es versteht sich, dass die verschiedenen Ausgestaltungen einzeln oder in beliebigen Kombinationen realisiert sein können. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Im Folgenden wird die Erfindung anhand einer Zeichnung näher erläutert. Die Zeichnung ist eine schematische Darstellung und nicht maßstabsgetreu. Die Zeichnung schränkt die Erfindung in keiner Weise ein.

Es zeigen:
Figur 1 eine schematische Darstellung einer erfindungsgemäß ausgebildeten Scheibenanordnung,
Figur 2 ein Flussdiagramm eines Ausführungsbeispiels des erfindungsgemäßen Verfahrens und
Figur 3 ein Flussdiagramm eines weiteren Ausführungsbeispiels des erfindungsgemäßen Verfahrens.

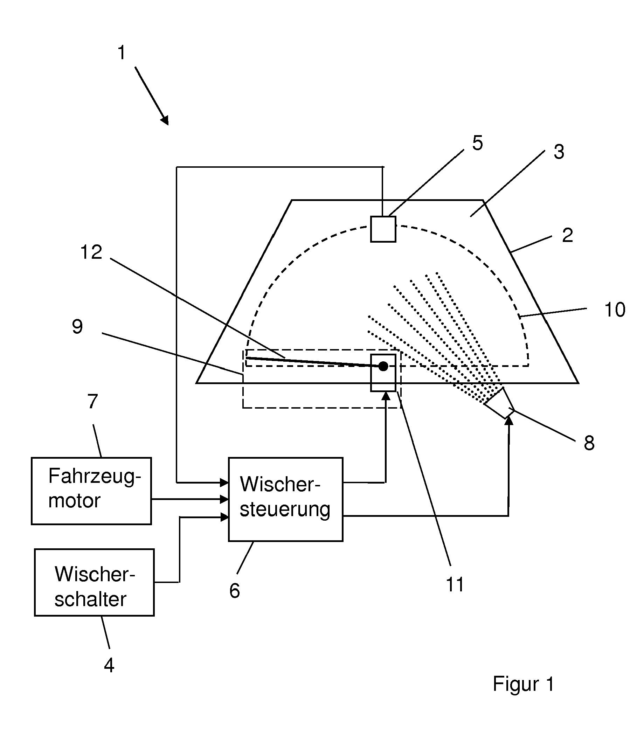

Figur 1 zeigt eine schematische Darstellung einer mit dem Bezugszeichen 1 bezeichneten, erfindungsgemäß ausgebildeten Scheibenanordnung. Die Scheibenanordnung 1 umfasst eine Scheibe 2 am Beispiel einer transparenten Windschutzscheibe eines Kraftfahrzeugs und ist hier als Verbundscheibe ausgebildet. Die Scheibe 2 verfügt über eine starre Außenscheibe und eine starre Innenscheibe, die beide als Einzelscheiben ausgebildet und über eine thermoplastische Klebeschicht miteinander verbunden sind. Die beiden Einzelscheiben sind annähernd von gleicher Größe und haben in etwa eine trapezförmig geschwungene Kontur. Die Erfindung ist hierauf nicht eingeschränkt und die Scheibe 2 kann auch jede andere für die praktische Anwendung geeignete Form aufweisen. Die beiden Einzelscheiben sind aus einem gläsernen Material, wie Floatglas, Gussglas oder Keramikglas oder einem nichtgläsernen Material, beispielsweise Kunststoff, insbesondere Polystyrol (PS), Polyamid (PA), Polyester (PE), Polyvinylchlorid (PVC), Polycarbonat (PC), Polymethylmethacrylat (PMA) oder Polyethylenterephtalat (PET) gefertigt. Als Klebeschicht zur Verbindung der beiden Einzelscheiben kann beispielsweise Kunststoff, insbesondere auf Basis von Polyvinylbutyral (PVB), Ethylen-Vinyl-Acetat (EVA) und Polyurethan (PU), eingesetzt werden. Die Scheibe 2 kann auf oder zwischen den beiden Einzelscheiben weitere funktionelle Schichten enthalten, beispielsweise beheizbare Schichten oder Schichten die Wärmestrahlung reflektieren.

Die Außenseite der Scheibe 2 weist eine hydrophobe Beschichtung auf. Außenseite der Scheibe 2 bedeutet im Sinne der hier vorliegenden Erfindung die dem Fahrzeuginnenraum abgewandte Oberfläche der Scheibe 2. Die hydrophobe Beschichtung enthält beispielsweise eine Grundschicht aus Siliziumoxycarbid und eine außenliegende hydrophobe Beschichtung aus fluoriertem Alkylsilan. Derartige Beschichtungen sind beispielsweise aus WO 2010/0729299 A1 oder WO 2011/070293 A1 bekannt und darin ausführlich beschrieben.

Die Scheibenanordnung 1 weist weiterhin einen Regensensor 5 auf, der beispielsweise auf der Innenseite der Scheibe 2 angeordnet ist. Der Regensensor ist beispielsweise ein optischer Regensensor, der eine Infrarot-LED aufweist und die Wassermenge auf der Außenseite der Scheibe 2 über die Reflektion des Infrarotlichts ermittelt.

Der Regensensor 5 ist über eine Datenleitung mit einer mikroprozessorbasierten Wischersteuerung 6 datentechnisch verbunden. Die Wischersteuerung 6 ist programmtechnisch so eingerichtet, dass das erfindungsgemäße Verfahren zur Reinigung und Trocknung der Scheibe 2 ausgeführt werden kann. Die Wischersteuerung 6 ist weiterhin über eine Datenleitung mit einem Wischerschalter 4 verbunden. Die Wischersteuerung 6 verarbeitet die eingehenden Daten des Regensensors 5 und des Wischerschalters 4 und gibt ein dem erfindungsgemäßen Verfahren entsprechendes Steuersignal an eine Wischeranordnung 9 aus. Die Wischeranordnung 9 enthält einen Wischermotor 11 und einen Scheibenwischer 12. Die Wischeranordnung 9 kann auch mehrere Wischermotoren 11 und/oder Scheibenwischer 12 aufweisen. Durch das Steuersignal der Wischersteuerung 6 wird ein Wischvorgang durchgeführt und der Scheibenwischer 12 über den Wischbereich 10 der Scheibe 2 bewegt. Die Scheibenanordnung 1 kann eine Scheibenwaschanlage 8 enthalten, die ebenfalls durch die Wischersteuerung 6 über eine Steuerleitung an- und ausgeschaltet wird.

Die Wischersteuerung 6 kann zusätzlich über eine Datenleitung mit dem Fahrzeugmotor 7 oder der Zündelektrik verbunden sein. Auf diese Weise werden der Wischersteuerung 6 Informationen über den Motorzustand zugeführt und beispielsweise das erfindungsgemäße Verfahren automatisch gestartet.

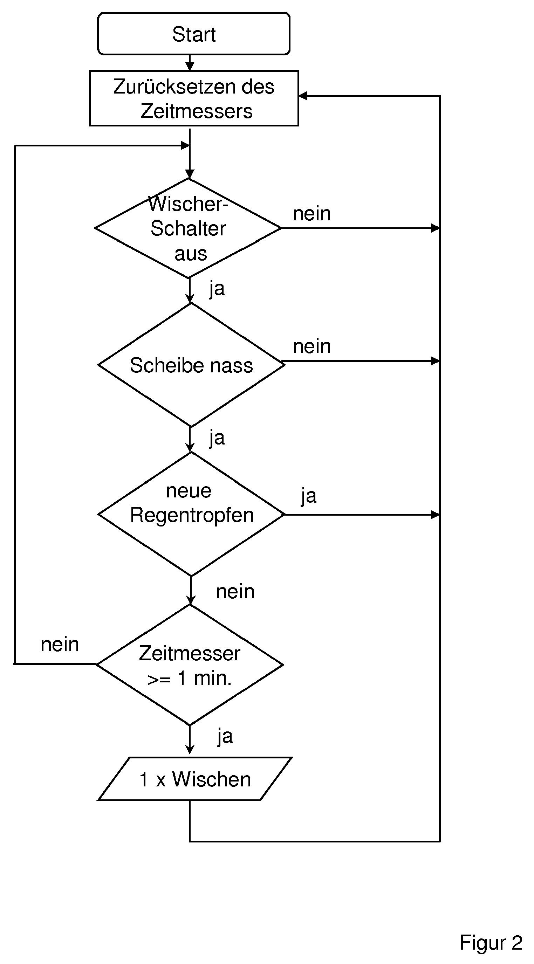

In Figur 2 ist ein Fluss- bzw. Ablaufdiagram zur Veranschaulichung eines beispielhaften erfindungsgemäßen Verfahrens dargestellt. Ein konkreter Vorgang zur Reinigung und Trocknung der Scheibe 2 wird hier automatisch nach Abschalten des Fahrzeugmotors gestartet. Denkbar wäre auch, dass der Vorgang durch das manuelle Betätigen eines (nicht dargestellten) Schaltelements in einer Bedienkonsole des Fahrzeugs aktiviert bzw. gestartet wird.

Nach dem Start des Vorgangs wird ein in der Wischersteuerung 6 integrierter Zeitmesser zurückgesetzt (Schritt A). Anschließend wird in Schritt B der Schaltzustand des Wischerschalters 4 überprüft. Ist der Wischerschalter 4 eingeschaltet, befindet sich der Scheiben-wischer noch im Wischvorgang und es wird Schritt A wiederholt. Ist der Wischerschalter 4 ausgeschaltet, wird Schritt C durchgeführt.

In Schritt C wird das Datensignal des Regensensors 5 überprüft. Ist die Scheibe 2 trocken, wird erneut Schritt A durchgeführt. Ist die Scheibe 2 nass, wird Schritt D durchgeführt.

In Schritt D wird der Regensensor erneut überprüft. Entspricht das Signal des Regensensors neu hinzukommenden Regentropfen wird erneut Schritt A durchgeführt. Detektiert der Regensensor keine neuen Regentropfen, so wird der nächste Schritt E durchgeführt.

In Schritt E wird der Zeitmesser überprüft. Gibt der Zeitmesser beispielsweise eine Zeitdauer kleiner 3 Minuten vor, so wird Schritt B durchgeführt. Gibt der Zeitmesser eine Zeitdauer größer oder gleich 3 Minuten vor, so wird beispielsweise ein Wischvorgang durchgeführt. Anschließend wird das erfindungsgemäße Verfahren im Schritt A neu begonnen oder der Vorgang beendet.

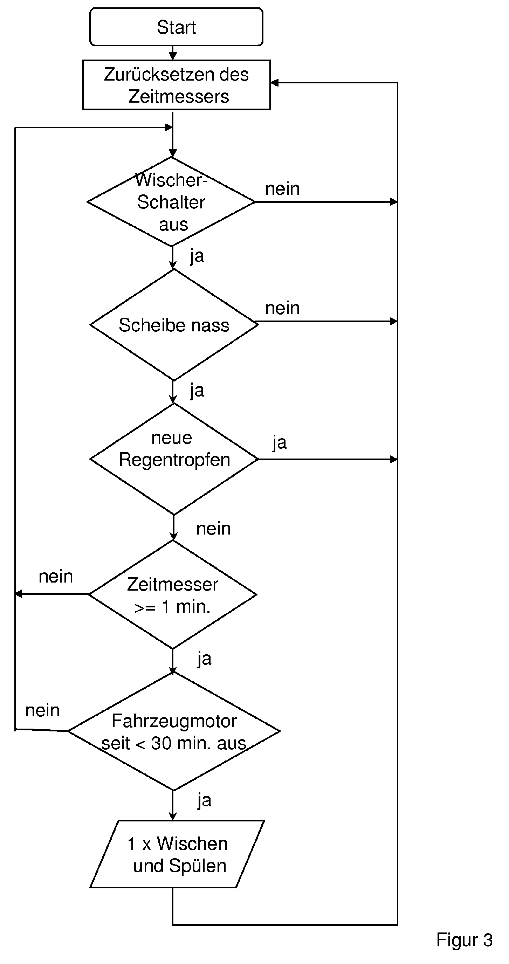

In Figur 3 ist ein Fluss- bzw. Ablaufdiagram einer Weiterbildung des erfindungsgemäßen Verfahrens aus Figur 2 dargestellt. Vor dem Ausführen des Wischvorgangs wird die Zeitdauer zum Abschalten des Fahrzeugmotors bestimmt und der Wischvorgang nur ausgeführt, wenn der Fahrzeugmotor vor weniger als beispielsweise 30 min. ausgeschaltet wurde. Des Weiteren wird vor oder während des Wischvorgangs die Scheibenwaschanlage 8 eingeschaltet und die Scheibe 2 mit einer Reinigungslösung besprüht.

In Tabelle 1 sind Kontaktwinkelmessungen am Beispiel einer Scheibe 2 mit hydrophober Beschichtung 3 dargestellt, die mit dem erfindungsgemäßen Verfahren gewischt wurde. Als Vergleichsbeispiel sind Kontaktwinkelmessungen an einer Scheibe 2 mit hydrophober Beschichtung 3 dargestellt, wobei die Scheibe 2 nach dem Stand der Technik gewischt wurde. In der Tabelle ist jeweils der Kontaktwinkel der unbenutzten Beschichtung und der Kontaktwinkel der Beschichtung nach einem Testdurchlauf von 14 Tagen aufgeführt. Als Kontaktwinkel wird der Winkel bezeichnet, den ein Flüssigkeitstropfen auf der Oberfläche eines Feststoffs zu dieser Oberfläche bildet. Oberflächen mit einem Kontaktwinkel >90° werden als hydrophob bezeichnet. Je höher der Kontaktwinkel, desto hydrophober ist die Oberfläche und desto besser ist die wasserabweisende Wirkung der Beschichtung.

**Tabelle 1**

| | Kontaktwinkel der neuen Beschichtung | Kontaktwinkel der Beschichtung nach Testdurchlauf | Änderung |
|---|---|---|---|
| Beispiel: Wischen mit erfindungsgemäßem Verfahren | 118° | 108° | - 8% |
| Vergleichsbeispiel: Wischen nach Stand der Technik | 120° | 80° | - 33 % |

Der Kontaktwinkel von Wasser auf einer neuen, unbenutzten Beschichtung 3, unmittelbar nach deren Herstellung, beträgt im Beispiel 118° und im Vergleichsbeispiel 120°. Nach dem Testdurchlauf ist der Kontaktwinkel im Beispiel mit Wischen nach dem erfindungsgemäßen Verfahren um 8% auf 108° verringert. Der Kontaktwinkel ist damit größer als 90° und damit ausreichend wasserabweisend für den gewünschten Betrieb beispielsweise als Windschutzscheibe in einem Kraftfahrzeug.

Die Beschichtung 3 des Vergleichsbeispiels wird während des Testdurchlaufs nach dem Stand der Technik gewischt, wie es in Serienmodellen von Kraftfahrzeugen üblich ist. Das bedeutet, dass die Scheibe manuell oder über einen Regensensor während des Niederschlags gewischt wird. Ein erfindungsgemäßes Trocknen der Scheibe 2 nach dem Niederschlag erfolgt nicht. Der Kontaktwinkel der Beschichtung 3 nach dem Vergleichsbeispiels ist nach dem Testdurchlauf um 33 % auf 80° verringert. Eine hydrophobe Beschichtung 3 mit einem Kontaktwinkel von 80° hat keine ausreichende wasserabweisende Wirkung für den gewünschten Betrieb beispielsweise als Windschutzscheibe in einem Kraftfahrzeug.

Wie die Untersuchungen der Erfinder ergaben, wird durch das Reinigen und Trocknen der nassen Scheibe die hydrophobe Wirkung der Beschichtung 3 der Scheibe 2 aufrechterhalten und die Lebensdauer der Beschichtung 3 verlängert. Dabei ist es besonders vorteilhaft, wenn das erfindungsgemäße Verfahren im abgeschalteten Zustand des Fahrzeugs ununterbrochen durchgeführt wird, insbesondere bei längerem Stillstand im freien Gelände ohne Überdachung. Durch das erfindungsgemäße Verfahren wird die hydrophobe Beschichtung 3 der Scheibe 2 schnell getrocknet und Wasser weggewischt. Verschmutzungen wie Staub und Insektenreste werden vor dem Antrocknen und Festsetzen entfernt. Eine Kalkablagerung durch eintrocknendes Wasser wird sicher vermieden. Durch diese Maßnahme bleibt die wasserabweisende Wirkung der hydrophoben Beschichtung 3 beispielsweise über die von der Automobilindustrie geforderten 100.000 Betriebskilometer erhalten.

Dieses Ergebnis war für den Fachmann unerwartet und überraschend.

### Bezugszeichenliste

- 1: Scheibenanordnung
- 2: Scheibe
- 3: hydrophobe Beschichtung
- 4: Wischerschalter
- 5: Regensensor
- 6: Wischersteuerung
- 7: Fahrzeugmotor
- 8: Scheibenwaschanlage
- 9: Wischeranordnung
- 10: Wischbereich
- 11: Wischermotor
- 12: Scheibenwischer

- W: Wartezeit
- Z: Abschaltzeit

## Patentansprüche

1. Verfahren zur Reinigung und Trocknung einer transparenten Scheibe (2) mit hydrophober Beschichtung (3) zum Abwischen der Restfeuchte, wobei nach dem Abschalten eines Fahrzeugmotors (7) die Wassermenge auf der Außenseite (I) der Scheibe (2) gemessen wird und bei konstanter oder abnehmender Wassermenge nach einer Wartezeit (W) von mindestens 1 Minute mindestens ein Wischvorgang ausgeführt wird.

2. Verfahren nach Anspruch 1, wobei die Wassermenge durch einen Regensensor (5) und die Wartezeit (W) durch einen Zeitmesser gemessen wird.

3. Verfahren nach einem der Ansprüche 1 oder 2, wobei der Wischvorgang durch eine Wischersteuerung (6) gesteuert wird.

4. Verfahren nach einem der Ansprüche 1 bis 3, wobei
A) der Zeitmesser zurückgesetzt wird;
B) ein Wischerschalter (4) überprüft wird, wobei Schritt A) durchgeführt wird, wenn der Wischerschalter (4) eingeschaltet ist oder Schritt C) durchgeführt wird, wenn der Wischerschalter (4) ausgeschaltet ist;
C) der Regensensor (5) überprüft wird, wobei Schritt A) durchgeführt wird, wenn die Scheibe (2) trocken ist oder Schritt D) durchgeführt wird, wenn die Scheibe (2) nass ist;
D) der Regensensor (5) überprüft wird, wobei Schritt A) durchgeführt wird, wenn neue Regentropfen detektiert werden oder Schritt E) durchgeführt wird, wenn keine neuen Regentropfen detektiert werden;
E) der Zeitmesser überprüft wird, wobei Schritt B) durchgeführt wird, wenn der Zeitmesser eine Zeitdauer kleiner der Wartezeit (W) vorgibt oder Schritt F) durchgeführt wird, wenn der Zeitmesser eine Zeitdauer größer oder gleich der Wartezeit (W) vorgibt;
F) mindestens ein Wischvorgang ausgeführt wird und Schritt A) wiederholt wird.

5. Verfahren nach einem der Ansprüche 1 bis 4, wobei ein bis zehn Wischvorgänge, bevorzugt ein bis drei und besonders bevorzugt ein Wischvorgang ausgeführt wird.

6. Verfahren nach einem der Ansprüche 1 bis 5, wobei der Wischvorgang nach einer Wartezeit (W) von 1 Minute bis 30 Minuten, bevorzugt 2 Minuten bis 10 Minuten ausgeführt wird.

7. Verfahren nach einem der Ansprüche 1 bis 6, wobei vor oder während dem Wischvorgang eine Scheibenwaschanlage (8) eingeschaltet wird.

8. Verfahren nach einem der Ansprüche 1 bis 6, wobei der Wischvorgang nur ausgeführt wird, wenn der Fahrzeugmotor vor einer Abschaltzeit Z von höchstens 120 Minuten, bevorzugt 60 Minuten und besonders bevorzugt 30 Minuten ausgeschaltet wurde.

9. Vorrichtung zur Reinigung und Trocknung einer transparenten Scheibe (2) mit hydrophober Beschichtung (3) zum Abwischen der Restfeuchte, mindestens umfassend:
- eine Wischeranordnung (9) mit einem Wischer (12) auf der Außenseite der Scheibe (2) und einem Wischermotor (11) zum Durchführen eines Wischvor- gangs,
- einen Regensensor (5) zum Messen der Wassermenge auf der Außenseite der Scheibe (2),
- eine mit der Wischeranordnung (9) und dem Regensensor (5) verbundene Wischersteuerung (6),
wobei die Wischersteuerung (6) nach dem Abschalten des Fahrzeugmotors (7), bei konstanter oder abnehmender Wassermenge nach einer Wartezeit (W) von mindestens 1 Minute mindestens einen Wischvorgang ausführt.

10. Vorrichtung nach Anspruch 9, wobei die hydrophobe Beschichtung (3) eine fluorierte Alkylsilan-Beschichtung enthält.

11. Vorrichtung nach Anspruch 10, wobei die hydrophobe Beschichtung (3) Siliziumdioxid SiO₂ und optional ein Element oder mehrere Elemente aus der Gruppe AI, B, C und Zr, bevorzugt Siliziumoxycarbid SiOₓC_{y} enthält.

12. Verwendung des Verfahrens nach einem der Ansprüche 1 bis 8 oder der Vorrichtung nach einem der Ansprüche 9 bis 11 in einem Fortbewegungsmittel zur Fortbewegung auf dem Lande, in der Luft oder zu Wasser, insbesondere in Kraftfahrzeugen, und insbesondere als Windschutzscheibe.

## Claims

1. Method for cleaning and drying a transparent pane (2) having a hydrophobic coating (3) for wiping off the residual moisture, wherein after a motor vehicle engine (7) is turned off, the quantity of water on the outer side (I) of the pane (2) is measured and, in the case of a constant or decreasing quantity of water, after a waiting time (W) of at least 1 minute, at least one wiping operation is carried out.

2. Method according to claim 1, wherein the quantity of water is measured by a rain sensor (5) and the waiting time (W) is measured by a timer.

3. Method according to one of claims 1 or 2, wherein the wiping operation is controlled by a wiper control (6).

4. Method according to one of claims 1 through 3, wherein
A) the timer is reset;
B) a wiper switch (4) is checked, whereupon Step A) is performed if the wiper switch (4) is turned on, or Step C) is performed if the wiper switch (4) is turned off;
C) the rain sensor (5) is checked, whereupon Step A) is performed if the pane (2) is dry, or Step D) is performed if the pane (2) is wet;
D) the rain sensor (5) is checked, whereupon Step A) is performed if new rain drops are detected, or Step E) is performed if no new rain drops are detected;
E) the timer is checked, whereupon Step B) is performed if the timer indicates a period less than the waiting time (W), or Step F) is performed if the timer indicates a period greater than or equal to the waiting time (W);
F) at least one wiping operation is carried out and Step A) is repeated.

5. Method according to one of claims 1 through 4, wherein one to ten wiping operations, preferably one to three, and particularly preferably one wiping operation is carried out.

6. Method according to one of claims 1 through 5, wherein the wiping operation is carried out after a waiting time (W) of 1 minute to 30 minutes, preferably 2 minutes to 10 minutes.

7. Method according to one of claims 1 through 6, wherein before or during the wiping operation, a windshield washer system (8) is switched on.

8. Method according to one of claims 1 through 6, wherein the wiping operation is carried out only if the motor vehicle engine had been switched off before a shutdown time Z of at most 120 minutes, preferably 60 minutes, and particularly preferably 30 minutes.

9. Device for cleaning and drying a transparent pane (2) having a hydrophobic coating (3) for wiping off the residual moisture, comprising at least:
- a wiper arrangement (9) with a wiper (12) on the outer side of the pane (2) and a wiper motor (11) for performing a wiping operation,
- a rain sensor (5) for measuring the quantity of water on the outer side of the pane (2),
- a wiper control (6) connected to the wiper arrangement (9) and the rain sensor (5),
wherein after the motor vehicle engine (7) is turned off, in the case of a constant or decreasing quantity of water, the wiper control (6) carries out at least one wiping operation, after a waiting time (W) of at least 1 minute.

10. Device according to claim 9, wherein the hydrophobic coating (3) contains a fluorinated alkyl silane coating.

11. Device according to claim 10, wherein the hydrophobic coating (3) contains silicon dioxide SiO₂ and, optionally, one element or a plurality of elements from the group AI, B, C, and Zr, preferably silicon oxycarbide SiOₓC_{y}.

12. Use of the method according to one of claims 1 through 8 or of the device according to one of claims 9 through 11 in a means of transportation for travel on land, in the air, or on water, in particular in motor vehicles, and in particular as a windshield.

## Revendications

1. Procédé pour le nettoyage et le séchage d'une vitre transparente (2) avec un revêtement hydrophobe (3) pour l'essuyage de l'humidité résiduelle, dans lequel après l'arrêt du moteur de véhicule (7) la quantité d'eau à la surface extérieure (1) de la vitre (2) est mesurée et pour un volume d'eau constant ou dégressif au moins une opération d'essuyage est effectuée après un délai d'attente (W) d'au moins 1 minute.

2. Procédé selon la revendication 1, dans lequel la quantité d'eau est mesurée par un détecteur de pluie (5) et le délai d'attente (W) par une minuterie.

3. Procédé selon l'une des revendications 1 ou 2, dans lequel l'action d'essuyage est commandée par une commande d'essuie-glace (6).

4. Procédé selon l'une des revendications 1 à 3, dans lequel
A) la minuterie est remise à zéro ;
B) un commutateur d'essuie-glace (4) est vérifié, où l'étape A) est effectuée si le commutateur d'essuie-glace (4) est en marche ou l'étape C) est effectuée si le commutateur d'essuie-glace (4) est à l'arrêt ;
C) le détecteur de pluie (5) est vérifié, où l'étape A) est effectuée si la vitre (2) est sèche ou l'étape D) est effectuée si la vitre (2) est humide ;
D) le détecteur de pluie (5) est vérifié, où l'étape A) est effectuée si de nouvelles gouttes de pluie sont détectées ou l'étape E) est effectuée si aucune nouvelle goutte de pluie n'est détectée ;
E) la minuterie est vérifiée, où l'étape B) est effectuée si la minuterie spécifie une durée inférieure au délai d'attente (W) ou l'étape F) est effectuée si la minuterie spécifie une durée supérieure ou égale au délai d'attente (W) ;
F) u moins une opération d'essuyage est effectuée et l'étape A) est répétée.

5. Procédé selon l'une des revendications 1 à 4, dans lequel entre une et dix opérations d'essuyage sont exécutées, de préférence entre une et trois opérations d'essuyage et de façon particulièrement préférée une seule opération d'essuyage.

6. Procédé selon l'une des revendications 1 à 5, dans lequel l'action d'essuyage est exécuté après un délai d'attente (W) de 1 minute à 30 minutes, de préférence de 2 minutes à 10 minutes.

7. Procédé selon l'une des revendications 1 à 6, dans lequel avant ou pendant l'action d'essuyage une installation de lavage de vitres (8) est mise en marche.

8. Procédé selon l'une des revendications 1 à 6, dans lequel l'opération d'essuyage n'est effectuée que si le moteur du véhicule est désactivé avant un temps d'arrêt Z de 120 minutes au maximum, de préférence de 60 minutes et de façon particulièrement préférée de 30 minutes.

9. Dispositif pour le nettoyage et le séchage d'une vitre transparente (2) avec revêtement hydrophobe (3) pour l'essuyage de l'humidité résiduelle, qui comprend au moins:
- un dispositif d'essuie-glace (9) avec une balai d'essuie-glace (12) à l'extérieur de la vitre (2) et un moteur d'essuie-glace (11) pour effectuer une opération de nettoyage,
- un détecteur de pluie (5) pour mesurer la quantité d'eau à l'extérieur de la vitre (2),
- une commande d'essuie-glace (6) associée au dispositif d'essuie-glace (9) et le capteur de pluie (5),
dans lequel, après l'arrêt du moteur du véhicule (7), après une attente d'au moins 1 minute, à un volume constant ou dégressif d'eau (W), la commande de l'essuie-glace (6), exécute au moins une action d'essuyage.

10. Dispositif selon la revendication 9, dans lequel le revêtement hydrophobe (3) contient un revêtement en alkylsilane fluoré.

11. Dispositif selon la revendication 10, dans lequel le revêtement hydrophobe (3) contient du dioxyde de silicium SiO₂ et en option un élément ou plusieurs éléments du groupe AI, B, C et Zr de préférence de l'oxycarbure de silicium SiOₓC_{y},.

12. Utilisation de la procédure selon l'une des revendications 1 à 8 ou du dispositif selon l'une des revendications 9 à 11 dans un moyen de transport, pour le déplacement sur terre, dans l'air ou sur l'eau, en particulier dans des véhicules automobiles et en particulier comme pare-brise.
